# EUROPEAN PATENT APPLICATION

(11) **EP 3 489 896 A1**
(43) Date of publication of application: **29.05.2019**
(21) Application number: 17306649.9
(22) Date of filing: 28.11.2017
(51) Int. Cl.: G06T 7/174

(54) **METHOD AND SYSTEM FOR DETECTING TV SCREEN**

(71) Applicant: THOMSON LICENSING, 92130 Issy les Moulineaux (FR)
(72) Inventor: SERVANT, FABIEN, 35576 CESSON SEVIGNE CEDEX (FR); FRADET, MATTHIEU, 35576 CESSON SEVIGNE CEDEX (FR)
(74) Representative: Vidon Brevets & Stratégie

(57) **Abstract**

The present disclosure relates to a method detecting a screen of a display device in an image of a scene. It comprises the steps of:
- capturing (S1) a stereoscopic visible light image of said scene,
- determining (S2) at least one planar quadrilateral area in said stereoscopic visible light image,
- illuminating (S3) said scene by a non-visible light pattern comprising isolated pixels,
- capturing (S4) a non-visible light image of said illuminated scene,
- determining (S5), in the non-visible light image, at least one block of illuminated adjacent pixels resulting from the diffusion of the non-visible light received by a point of a glass of a screen to adjacent points of the glass, and
- detecting (S6), as a screen of a display device in said stereoscopic visible light image, a planar quadrilateral area including pixels whose associated pixels in the image of the illuminated scene comprises at least one block of illuminated adjacent pixels.

## Description

### 1. Technical field

The present disclosure relates generally to the field of TV screen detection. This present disclosure may have applications in many areas of activity such as augmented reality.

### 2. Background

Television screens are an important source of visual information in common environments such as a living room. Processing the information delivered by the screen is a very important topic. For example, in computer vision for augmented reality, one may use the video content to localize the user camera with respect to the TV screen. The video content being dynamic, the system needs to identify the displayed frame in the video. The identification is complex and prone to outliers.

On top of that, the user may not point its camera such that the TV is perfectly centered in the image and parallel to the camera image plane. For example, the user may be currently looking at something else, so that the TV screen appears heavily inclined in the image. The user may not even know that we are looking for the TV screen in the live video. Yet, most advanced video analysis algorithms assume that the video is almost perfectly aligned with TV screen.

Some TV screen detection algorithms may be based only on a video capture and detection of a quadrilateral in these captured images. But these algorithms are not robust in real environments where the background is not uniform and in contrast with the TV borders. In addition, the algorithm may require the processing of a plurality of images before achieving TV screen detection.

### 3. Summary of Present disclosure

A purpose of the present disclosure is to alleviate all or part the above-mentioned drawbacks. The present disclosure proposes a method and a system for detecting the screen of any display device, such as a TV, a computer, a laptop, a tablet, a phone, in a scene captured by a camera. The expression "TV screen" will designate the screen of any type of display device in the present document.

The present disclosure uses basic physical properties of a TV screen for its detection in a captured scene. Each TV screen has a planar glass and, when a TV screen receives a light beam, for example an infrared beam, its glass diffuses the light beam around the impact point of the beam and it creates a glow effect around the impact point. Such a light beam is for example used for measuring a depth and this diffusion effect makes impossible the depth measure. Screen pixels can thus be regarded as the pixels which respect the following constraints:
- they lie on a planar quadrilateral structure, and
- the estimation of depth estimated by using the light beam is impossible for screen pixels and the illumination of one point of the scene by the light beam corresponds to a block of illuminated pixels in the captured image (the pixel corresponding to the illuminated point of the scene and its surrounding block of pixels are not black).

The TV screen detection method of the present disclosure consists in detecting such pixels in a scene illuminated by a non-visible light (such as infrared) and captured by a stereoscopic visible light camera and a non-visible light camera (such an infrared camera).

The present disclosure concerns a method for detecting a screen of a display device in an image of a scene, characterized in that it comprises the following steps:
- capturing a stereoscopic visible light image of said scene,
- determining at least one planar quadrilateral area in said stereoscopic visible light image,
- illuminating said scene by a non-visible light pattern comprising isolated pixels,
- capturing a non-visible light image of said illuminated scene,
- determining, in the non-visible light image of the illuminated scene, at least one block of illuminated adjacent pixels resulting from the diffusion of the non-visible light received by a point of a glass of a screen to adjacent points of the glass, and
- detecting, as a screen of a display device in said visible light stereoscopic image, a planar quadrilateral area, among said at least one planar quadrilateral area, including pixels whose associated pixels in the non-visible light image of the illuminated scene comprises at least one block of illuminated adjacent pixels.

According to an embodiment, the non-visible light is infrared light.

The present disclosure also concerns a system for detecting a screen of a display device in a scene, comprising:
- a stereoscopic visible light camera for capturing a stereoscopic visible light image of said scene,
- a projector for illuminating said scene by a non-visible light pattern comprising isolated pixels,
- a non-visible light camera for capturing a non-visible light image of said illuminated scene,
- a processing unit for
   - determining at least one planar quadrilateral area in said stereoscopic visible light image,
   - determining, in the non-visible light image of the illuminated scene, at least one block of illuminated adjacent pixels resulting from the diffusion of the non-visible light received by a point of a glass of a screen to adjacent points of the glass, and
   - detecting, as a screen of a display device in said visible light stereoscopic image, a planar quadrilateral area, among said at least one planar quadrilateral area, including pixels whose associated pixels in the non-visible light image of the illuminated scene comprises at least one block of illuminated adjacent pixels.

According to an embodiment, the projector and non-visible light camera are an infrared projector and an infrared camera respectively.

### 4. Brief description of the drawings

The present disclosure can be better understood with reference to the following description and drawings, given by way of example and not limiting the scope of protection, and in which:
- Fig.1 is a view of a scene of scene wherein a TV screen is to be detected, according to a non-restrictive embodiment of the present principles;
- Fig.2 is a top view of the scene of Fig.1 showing the cameras and projector used for implementing the present disclosure, according to a non-restrictive embodiment of the present principles;
- Fig.3 is a flow chart of the successive steps implemented when performing a method for detecting TV screen according to one embodiment of the present disclosure; and
- Fig.4 is a schematic view of a system according to one embodiment of the present disclosure.

The components in the figures are not necessarily to scale, emphasis instead being placed upon illustrating the principles of the present disclosure.

### 5. Description of embodiments

While example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Before discussing example embodiments in more details, it is noted that some example embodiments are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figures. The processes may correspond to methods, functions, procedures, subroutines, subprograms, etc.

Methods discussed below, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present disclosure. This present disclosure may, however, be embodied in many alternate forms and should not be construed as limited to only the embodiments set forth herein.

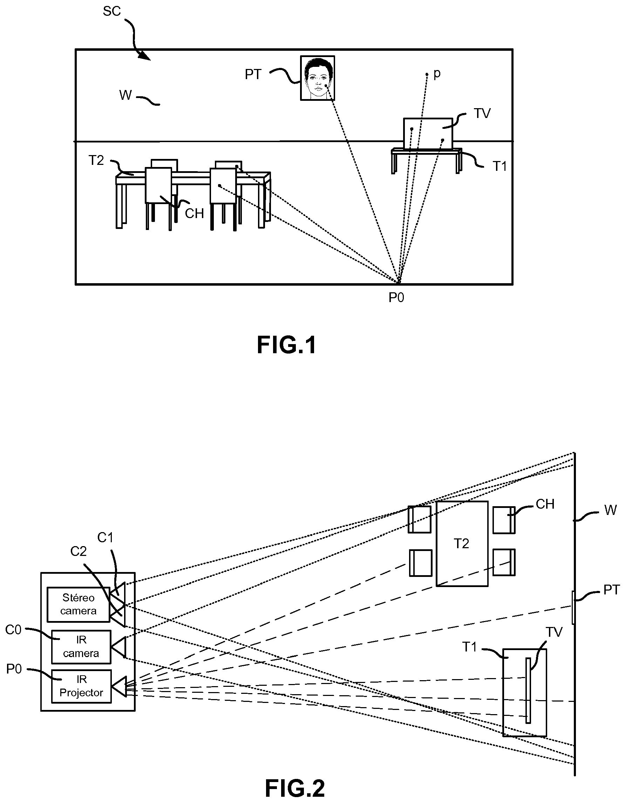

**Fig.1** represents a schematic view of an interior scene SC including a television set TV on a low table T1, a dining table T2 with its four chairs CH and a portrait PT hung on a wall W. The scene is illuminated by an infrared projector or IR projector P0 and captured by a stereoscopic camera and an infrared camera or IR camera C0 as shown in **Fig.2****.**

The stereoscopic camera comprises two classic visible light cameras: a left camera C1 and right camera C2.

The IR projector P0 projects a specific pattern P on the infrared spectrum which is detected by the IR camera C0. This pattern is chosen such that the surrounding block is different for each pixel of the IR projector P0. The pattern P includes a plurality of isolated pixels p, i.e. the adjacent pixels of each pixel of the pattern are not illuminated.

The IR camera C0 is used to capture images of the scene illuminated by the IR projector P0. The IR projector emits the IR pattern P. For better clarity and in view of simplification, the IR pattern P shown in Figs.1 & 2 only includes 6 pixels. Two of them are projected on the screen of the TV set.

The position of each pixel p of the IR pattern P is unique versus the position of the other pixels of the pattern such that it can be identified uniquely in the image captured by the IR camera C0. The position difference between a pixel p in the pattern P and the corresponding pixel in the image captured by the camera C0 can be used to estimate the depth for this pixel except for the pixel of a TV screen as described later.

The devices P0, C0, C1 and C2 are all looking in the same direction. They are rigidly attached to each other. The devices are for instance constituted by a RGB+D device, such as Intel R200, Microsoft Kinect, and an additional classic camera. The RGB+D device is made of a RGB standard camera, an infrared camera and an infrared projector. A second RGB camera is added to the first RGB camera in order to form the stereoscopic camera.

All the devices are on a common fixed rigid body which is mounted in factory. Therefore, rigid transformations from the space of the camera C0 to the space of the projector P0, from the space of the camera C2 to the space of the camera C1, from the space of the camera C1 to the space of the camera C0 may be defined once during a calibration phase carried out in factory.

Each device is geometrically calibrated such that for each pixel, either emitting or receiving, the associated coordinates in meters on the Z=1 plane is known.

Every device is assumed to be synchronized with each other using for example a common clock. Each device's measure is acquired simultaneously with some tolerance relative to the system motion and, if the system is static, there is no requirement on synchronicity.

The present disclosure exploits the feature that, when a pattern's pixel is projected onto a screen comprising a glass, such as the screen of a TV set, the screen glass will diffuse (glow effect) the pattern and the IR camera C0 is not be able to identify it. On the opposite, the stereoscopic camera C1, C2 is able to perform stereo matching on the left and right images even if it's behind a glass. Thus, in the stereoscopic image (left and right images), the pixels belonging to a planar quadrilateral structure but for which a depth estimation is not possible based on the image by the IR camera C0 (because of the diffusion or the glow effect) are considered as screen pixels. The pixels for which the depth cannot be estimated are those for which the light has diffused around of them. Therefore, they correspond in the IR image captured by the camera C0 to blocks of adjacent illuminated pixels.

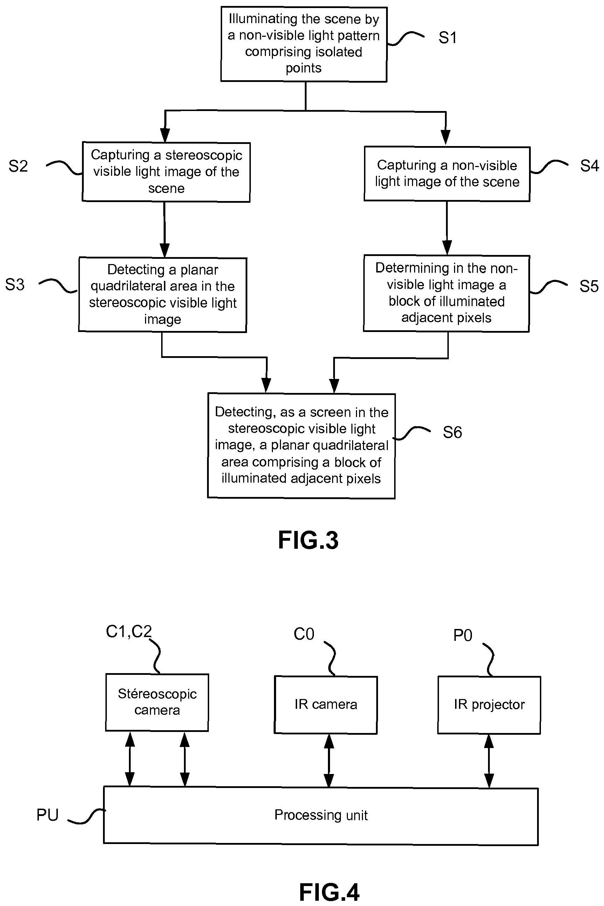

**Fig.3** is a flow chart of the method according to an embodiment of the present disclosure. The method comprises the following steps:
- **step S1:** illuminating the scene by an IR pattern comprising isolated pixels; the IR pattern is projected by the IR projector P0;
- **step S2:** capturing a stereoscopic visible light image of the illuminated scene SC by the cameras C1 and C2;
- **step S3:** determining at least one planar quadrilateral area in the stereoscopic visible light image;
- **step S4:** capturing a non-visible image (IR image) of the illuminated scene by the IR camera C0;
- **step S5:** determining, in the non-visible light image of the illuminated scene captured by the IR camera C0, at least one block of illuminated adjacent pixels resulting from the diffusion of the non-visible light received by a point of a glass of a screen to adjacent points of the glass; and
- **step S6:** detecting, as a screen of a display device in the stereoscopic visible light image, a planar quadrilateral area, among the determined planar quadrilateral areas, including pixels whose associated pixels in the image of the illuminated scene comprises at least one block of illuminated adjacent pixels.

The steps S1-S6 are advantageously performed at a same timestamp t. So the method does not need a plurality of consecutive images to detect a TV screen. It means that a TV screen can be detected at each discrete acquisition time stamp independently from the other time stamps. The method can however be implemented on a plurality of successive timestamps in order to improve the reliability of the result.

The implementation of all the steps S1-S6 is known per se by the skilled person, notably the detection of a planar quadrilateral structure in a stereoscopic visible light image and the detection of block of illuminated pixels in the IR image captured by the camera C0.

In step S3, the detection of a planar quadrilateral area is done by stereo matching. This detection may first comprise a detection of key or feature pixels in the stereoscopic image (left and right images). Such key pixels are for instance pixels whose surrounding region contains high frequency variations in luminosity. The key pixels of the left image are then matched if possible with the key pixels of the right image. The key pixels of the left image for which matching is not possible are deleted. Then, by using the pairs of matched pixels, a stereo triangulation is used to determine the 3D coordinates of each pixel in the 3D space of the left camera (or right camera). The key pixels of the left image are linked between each other by an operation of 2D triangulation, such the Delaunay triangulation. Each vertex of a triangle is a key pixel of the left image. It is then possible to determine the 3D coordinates of the vertices of the triangles since the 3D coordinates of the key pixels are known. Each pixel of a triangle in the left image is then compared to the corresponding triangle in the right image by using notably the rigid transformation from the left camera to the right camera in order to determine if the matching is correct. Then all adjacent coplanar triangles are grouped in a structure. Then each structure having a quadrilateral shape is considered as a potential TV screen.

In step S5, blocks of illuminated pixels in the IR image captured by the camera C0 are detected.

Finally, in step S6, by using the rigid transformations between the different devices C0, P0, C1 and C2, it is detected if a planar quadrilateral area comprises at least one block of illuminated adjacent pixels (pixels for which the depth cannot be estimated). If such a planar quadrilateral area is detected, it is considered as a TV screen.

This method is of particular interest since, as it uses basic physical properties of a display device screen, it works for any display device in the market.

This method can be used on a first frame or image of a video in order to detect a TV screen. The position of the TV screen can then be tracked by other methods in the video.

**Fig.4** represents a system for implementing the method of the present disclosure, according to a non-restrictive embodiment of the present principles. The system comprises the devices C0, C1, C2 and P0 mentioned previously and a processing unit for processing the images captured by the cameras and controlling these devices. More specifically, the system comprises:
- a stereoscopic camera or two classic cameras C1, C2 for capturing a stereoscopic visible light image of the scene,
- an IR projector P0 for illuminating the scene by an IR pattern comprising isolated pixels,
- an IR camera C0 for capturing an IR image of the illuminated scene, and
- a processing unit PU for determining at least one planar quadrilateral area in the stereoscopic visible light image, determining, in the IR image of the illuminated scene, at least one block of illuminated adjacent pixels resulting from the diffusion of the IR light received by a point of a glass of a screen to adjacent points of the glass, and detecting, as a screen of a display device in the stereoscopic visible light image, a planar quadrilateral area, among the determined planar quadrilateral areas, including pixels whose associated pixels in the non-visible light image of the illuminated scene comprises at least one block of illuminated adjacent pixels.

The processing unit PU can also be used for controlling the cameras and the projection and their synchronization.

The present disclosure has been described using infrared as non-visible light. Of course, other light of the non-visible spectrum than infrared can be used, for example light close to infrared in the spectrum.

Although a single embodiment of the present disclosure has been illustrated in the accompanying Drawings and described in the foregoing Detailed Description, it should be understood that the present disclosure is not limited to the disclosed embodiment, but is capable of numerous rearrangements, modifications and substitutions without departing from the present disclosure as set forth and defined by the following claims.

## Claims

1. A method for detecting a screen of a display device in an image of a scene, the method comprising:
- illuminating (S1) said scene by a non-visible light pattern comprising isolated pixels,
- capturing (S2) a stereoscopic visible light image of said illuminated scene,
- determining (S2) at least one planar quadrilateral area in said stereoscopic visible light image,
- capturing (S3) a non-visible light image of said illuminated scene,
- determining (S5), in the non-visible light image, at least one block of illuminated adjacent pixels resulting from the diffusion of the non-visible light received by a point of a glass of a screen to adjacent points of the glass, and
- detecting (S6), as a screen of a display device in said stereoscopic visible light image, a planar quadrilateral area, among said at least one planar quadrilateral area, including pixels whose associated pixels in the non-visible light image of the illuminated scene comprises at least one block of illuminated adjacent pixels.

2. The method according to claim 1, wherein the non-visible light is infrared light.

3. A system for detecting a screen of a display device in a scene, the system comprising:
- a stereoscopic visible light camera (C1, C2) for capturing a stereoscopic visible light image of said scene,
- a projector (P0) for illuminating said scene by a non-visible light pattern comprising isolated pixels,
- a non-visible light camera (C0) for capturing a non-visible light image of said illuminated scene,
- a processing unit (PU) for
• determining at least one planar quadrilateral area in said stereoscopic visible light image,
• determining, in the non-visible light image of the illuminated scene, at least one block of illuminated adjacent pixels resulting from the diffusion of the non-visible light received by a point of a glass of a screen to adjacent points of the glass, and
• detecting, as a screen of a display device in said stereoscopic visible light image, a planar quadrilateral area, among said at least one planar quadrilateral area, including pixels whose associated pixels in the non-visible light image of the illuminated scene comprises at least one block of illuminated adjacent pixels.

4. The system according to claim 3, wherein said projector and non-visible light camera are an infrared projector and an infrared camera respectively.
